# EUROPÄISCHE PATENTSCHRIFT

(11) **EP 0 741 068 B1**
(45) Veröffentlichungstag und Bekanntmachung des Hinweises auf die Patenterteilung: **19.06.2002**
(21) Anmeldenummer: 96106805.3
(22) Anmeldetag: 30.04.1996
(51) Int. Cl.: B62D 5/06

(54) **Verfahren zur Regelung der Pumpendrehzahl einer hydraulischen Servolenkeinrichtung**
Method for controlling the rotational speed of a pump of a hydraulic power steering device
Procédé de commande de vitesse de rotation d'une pompe pour une direction assistée hydraulique

(30) Priorität: 05.05.1995 DE 19516498
(43) Veröffentlichungstag der Anmeldung: 06.11.1996
(73) Patentinhaber: TRW Fahrwerksysteme GmbH & Co. KG, 40547 Düsseldorf (DE)
(72) Erfinder: Spillner, Robert, Dipl.Ing., 40476 Düsseldorf (DE)
(74) Vertreter: Stenger, Watzke & Ring Patentanwälte

(56) Entgegenhaltungen:
- EP-A- 0 534 332
- EP-A- 0 591 653
- DE-A- 4 032 876

## Beschreibung

Die Erfindung betrifft ein Verfahren zur Regelung der Drehzahl einer mittels eines Elektromotors angetriebenen Pumpe einer hydraulischen Servolenkeinrichtung eines Kfz in Abhängigkeit von der Lenkgeschwindigkeit.

Bei bekannten gatturigsgemäßen Lenksystemen strömt bei geringem Systemdruck immer ein konstanter Fördervolumenstrom durch ein Lenkventil zu einem Tank, auch wenn eine Servolenkunterstützung nicht erforderlich ist. Daraus resultiert eine ständige Leistungsaufnahme des Servolenksystems, welche sich in einem erhöhten Kraftstoffverbrauch bemerkbar macht. Darüber hinaus stellt das durchströmte Servolenksystem eine ständige Geräuschquelle dar.

Zur Optimierung derartiger Lenksysteme, und insbesondere zur Verbesserung der Wirtschaftlichkeit wurde im Stand der Technik bereits die Verwendung einer sogenannten Stand-by-Schaltung vorgeschlagen. Sobald die Lenkmomente unterhalb einer Momentschwelle liegen, verringert die Stand-by-Schaltung die Elektromotordrehzahl und damit den Fördervolumenstrom der Pumpe.

Aus der DE-OS 43 01 581 ist ein gattungsgemäßes Verfahren zur Regelung einer Pumpe in einem Kraftfahrzeug bekannt, wobei für einen energiesparenden Betrieb der Pumpe vorgeschlagen wird, die Drehzahl der Pumpe in Abhängigkeit von der Lenkgeschwindigkeit unterhalb eines Lenkgeschwindigkeitsgrenzwertes auf einem verringerten Wert konstant zu halten und erst bei Überschreiten des Lenkgeschwindigkeitsgrenzwertes linear oder stufenweise zu erhöhen. Die Konstantdrehzahl wird dabei so eingestellt, daß ein Fördervolumenstrom bei einem festgelegten Lenkgeschwindigkeitsgrenzwert eingestellt ist. Abgesehen davon, daß dieses Verfahren dazu führen kann, daß zumindest kurzzeitig kein ausreichender Fördervolumenstrom zur Verfügung steht, wird aufgrund einer rein empirischen Näherung nur eine grobe Wirkungsgradoptimierung erzielt. Darüber hinaus können systembezogene Einflüsse nicht berücksichtigt werden; so daß das Verfahren nicht in allen Einsatzfällen in gleichem Maße zu wirtschaftlichen Verbesserungen führen muß.

In der DE 4032876 A1 wurde eine Drehzahlregelung des Motors vorgestellt, welche die Motordrehzahl bis zum Erreichen der Stromgrenze konstant hält. Aus der EP 0534332 A1 ist eine Servolenkeinheit bekannt, bei welcher mittels eines Sensors die Drehgeschwindigkeit des Lenkrades ermittelt und mittels Pulsweitenmodulationsverfahren zur drehgeschwindigkeitsabhängigen Kontrolle des die Pumpe betreibenden Elektromotors verwendet wird. Eine Wirkungsgradoptimierung findet nicht statt, sondern es soll eine proportionale Beziehung zwischen der Drehgeschwindigkeit des Lenkrades und der Motorleistung der Servoeinheit hergestellt werden.

Ausgehend von diesem Stand der Technik liegt der vorliegenden Erfindung die **Aufgabe** zugrunde, ein Verfahren zur Regelung der Drehzahl einer elektromotorisch angetriebenen Pumpe einer hydraulischen Servolenkeinrichtung eines Kfz in Abhängigkeit von der Lenkgeschwindigkeit dahingehend zu verbessern, daß auf einfache Weise der Gesamtwirkungsgrad des Systems optimierbar ist.

Unter Gesamtwirkungsgrad im Sinne der vorliegenden Erfindung wird das Produkt aus dem Motor-Pumpenwirkungsgrad und dem hydraulischen Ventilwirkungsgrad verstanden. In Abhängigkeit von den jeweiligen Anwendungs- und Einbaubedingungen können diese von empirischen Mittelwerten abweichen.

Zur technischen **Lösung** dieser Aufgabe wird mit der Erfindung vorgeschlagen, daß der aufgrund einer ermittelten Lenkgeschwindigkeit errechnete hydraulische Volumenstrombedarf bis zu einem Maximum um einen zusätzlichen, den Gesamtwirkungsgrad des Systems berücksichtigenden Korrekturfaktor erhöht wird, um aus dem Ergebnis die Soll-Drehzahl der Pumpe zu berechnen und einzustellen.

Durch die erfindungsgemäße Lösung wird nicht einfach ein empirisch ermittelter unterer Konstantdrehzahlwert eingestellt, bis dieser für den tatsächlichen Bedarf nicht mehr ausreicht, sondern ein minimaler Drehzahlwert wird unter Berücksichtigung sowohl des Motor-Pumpenwirkungsgrades ais auch des hydraulischen Ventilwirkungsgrades um einen Korrekturwert erhöht, so daß sich eine entsprechende minimale Leistungsaufnahme einstellt. Diese steht einerseits spontan zur Verfügung, wenn ein erhöhter Fördervolumenstrom erforderlich ist, andererseits wird durch diese Maßnahme der Gesamtwirkungsgrad des Systems optimiert.

Gemäß einem Vorschlag der Erfindung wird die Lenkgeschwindigkeit über die Messung der Lenkdrehzahl ermittelt. Gemäß einem weiteren Vorschlag der Erfindung wird der hydraulische Fluß gemessen.

Gemäß einem besonders vorteilhaften Vorschlag der Erfindung wird der Korrekturfaktor in Abhängigkeit von dem jeweiligen Lenkvolumenstrom ermittelt. Dieses Verfahren kann computergesteuert sein, wobei lenkvolumenstrombezogene Korrekturwerte gespeichert sind. Diese können darüber hinaus systembezogen bereinigt sein. Daraus ergibt sich insgesamt ein lernfähiges System, welches in Abhängigkeit von den jeweils eingestellten Werten den Wirkungsgrad unter Berücksichtigung des Motor-Pumpenwirkungsgrades und des hydraulischen Ventilwirkungsgrades ermittelt und zur Optimierung die Korrekturwerte verändert. Die Motor- und hydraulischen Wirkungsgrade lassen sich tabellarisch in an sich bekannter Weise in einem Computer abrufbar speichern. Die entsprechenden Formeln sind an sich bekannt. Unter Berücksichtigung des jeweiligen Anwendungsfalles läßt sich somit in Abhängigkeit vom jeweiligen Lenkvolumenstrom ein optimaler Korrekturwert festlegen, um den der aufgrund einer ermittelten Lenkgeschwindigkeit errechnete hydraulische Volumenstrombedarf korrigiert wird, um den Gesamtwirkungsgrad des Systems optimal zu halten.

Gemäß einem weiteren Vorschlag der Erfindung erfolgt die Motordrehzahlregelung mittels eines Pulsweiten-Modulationsverfahrens.

Das erfindungsgemäße Verfahren ist einfach anwendbar und auch in bestehende Systeme nachrüstbar. Der Wirkungsgrad des Systems wird optimiert und die Wirtschaftlichkeit des Einsatzes derartiger Systeme damit erheblich erhöht.

Weitere Vorteile und Merkmale der Erfindung ergeben sich aus der folgenden Beschreibung anhand der Figuren. Dabei zeigen:
- Fig. 1: ein Volumenstrom/Druck-Diagramm ohne Regelungsverfahren;
- Fig. 2: ein Volumenstrom/Druck-Diagramm mit Regelungsverfahren;
- Fig. 3: ein Volumenstrom/Ventilwirkungsgrad-Diagramm und
- Fig. 4: eine schematische Darstellung eines Lenksystems.

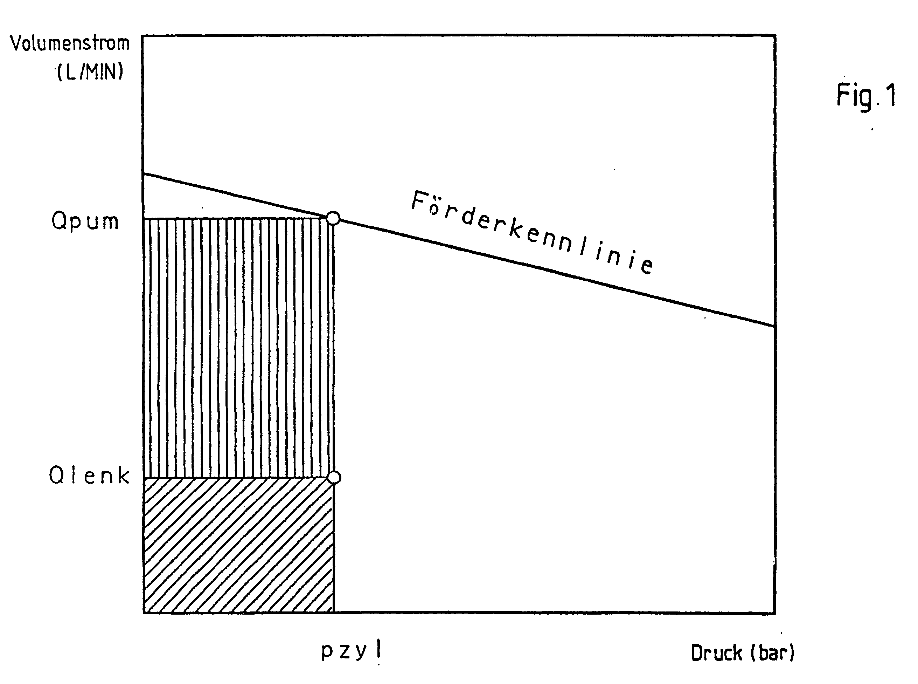

In Fig. 1 ist auf der Abszisse der Druck und auf der Ordinate der Volumenstrom aufgetragen. Bei herkömmlichen Servolenksystemen wird eine hydraulische Leistung aufgrund eines gegebenen Lenkvolumenstromes Qlenk bei einem gegebenen Zylinderdruck pzyl von dem Lenksystem verbraucht, während der Rest des durch die Pumpe zusätzlich gelieferten Volumenstroms (Qpump - Qlenk), beim Druck pzyl, eine Verlustleistung darstellt.

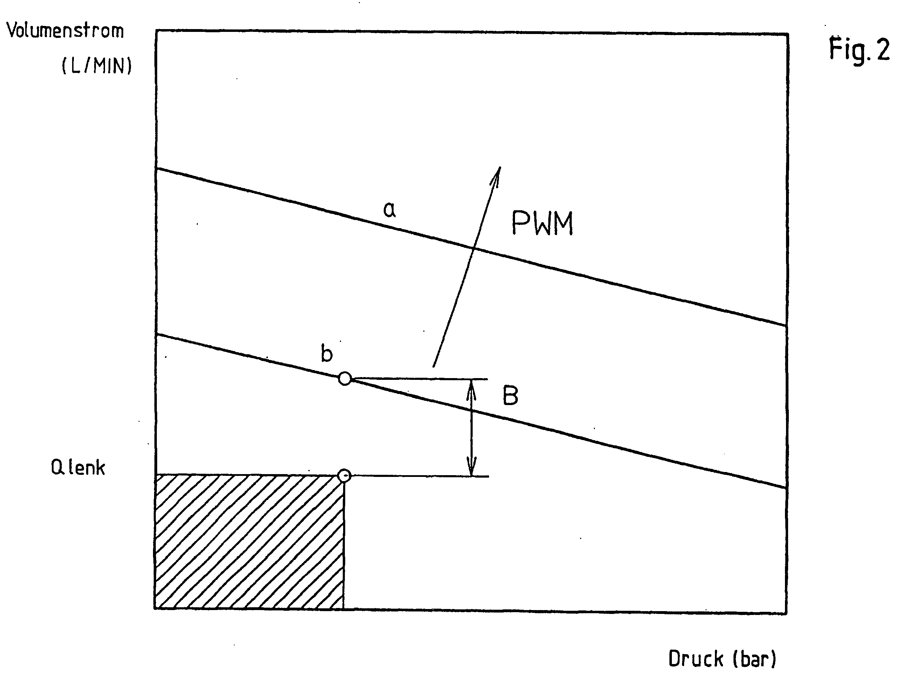

Bei dem in Fig. 2 gezeigten System wird der aufgrund einer gemessenen Lenkdrehzahl erforderliche Volumenstrom zuzüglich eines Korrekturfaktors B bereitgestellt, woraus sich die Förderkennlinie b ergibt. Durch Pulsweitenmodulation läßt sich diese bis zur Gerade a erhöhen, die den Verlauf bei 100 % Eingangsspannung zeigt, also den maximalen Volumenstrom.

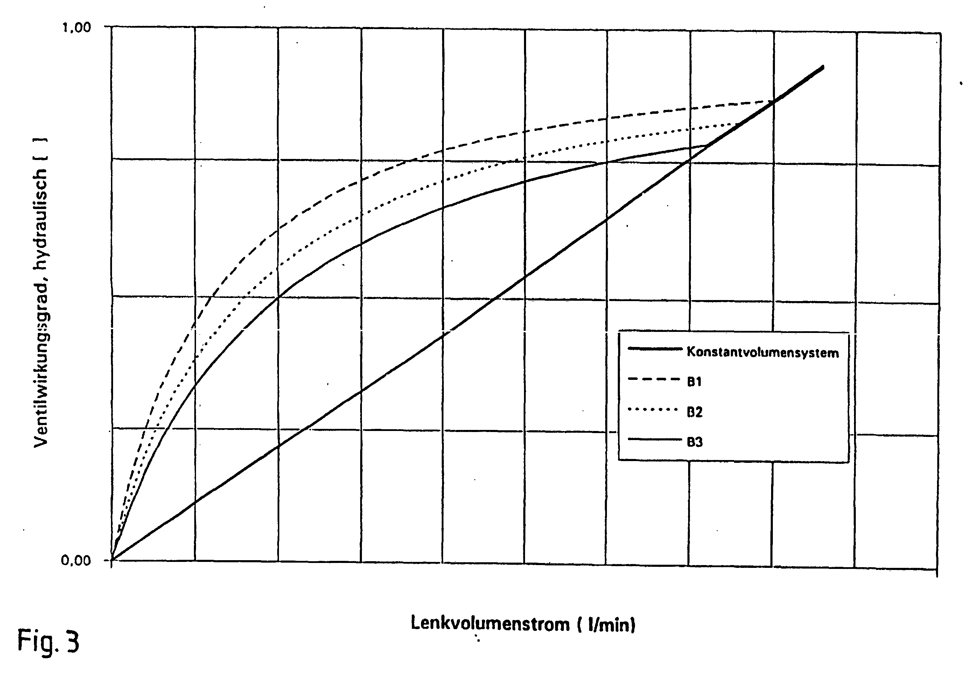

Der Verlauf des hydraulischen Ventilwirkungsgrades ist, in Abhängigkeit von der Lenkgeschwindigkeit für ein Konstantvolumenstromsystem und verschiedene Korrekturwerte B eines Systems mit geregelter Förderkennlinie, in Fig. 3 dargestellt. Hier zeigt sich, daß für kleine bis mittlere Lenkgeschwindigkeiten das erfindungsgemäße Verfahren einen deutlichen Wirkungsgradvorteil gegenüber an sich bekannten Konstantvolumenstromsystemen bietet, und somit einen geringeren Energiebedarf darstellt.

Die beschriebene Anpassung des Fördervolumenstromes an den tatsächlichen Lenkvolumenstrom erfordert für eine abfallende Förderkennlinie (Fig. 1) die Überwachung der Parameter des Zylinderdrucks, also beispielsweise der Stromaufnahme des Motors, und der Lenkgeschwindigkeit. Beide Parameter definieren in Abhängigkeit der Lenkgetriebeparameter einen Zustand im Volumenstrom/Druck-Diagramm, woraus sich die erforderliche Drehzahl des Motorpumpenaggregates unter Berücksichtigung des gewünschten Bypassflusses B errechnen läßt. Im Ergebnis sind Geräuschminimierungen und Energieeinsparungen durch Gesamtsystemoptimierungen erfaßbar.

Bei einer Drehzahlregelung des Motors, welche die Motordrehzahl bis zum Erreichen der Stromgrenze konstant hält, bedarf es dann unter Berücksichtigung einer solchen Kennlinie nur eines Parameters, nämlich der Lenkgeschwindigkeit, um den Fördervolumenstrom an den Lenkvolumenstrom anzupassen.

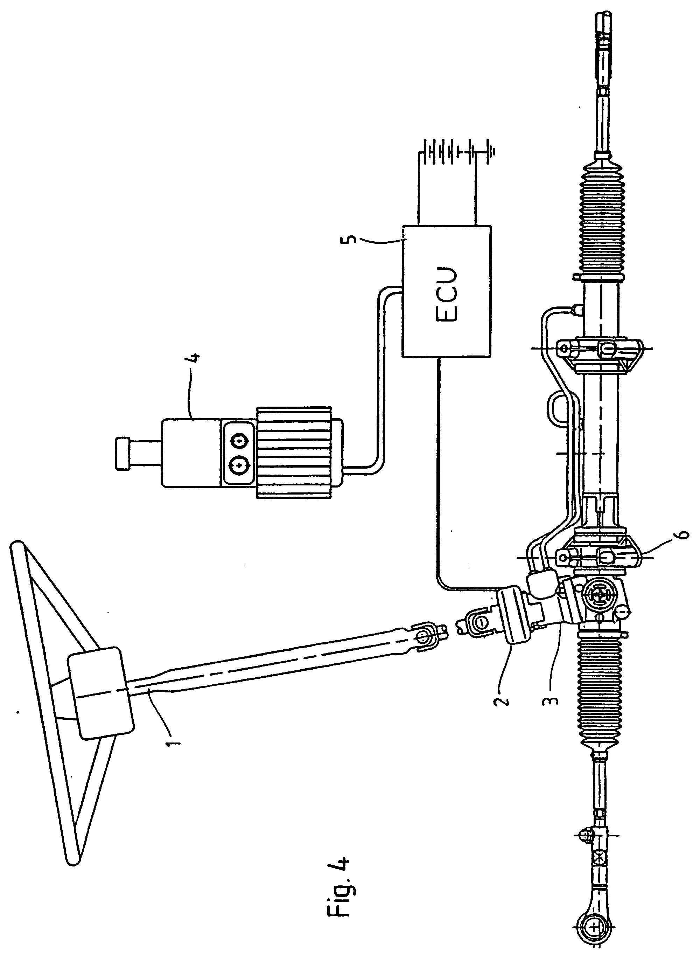

Bei dem in Fig. 4 gezeigten Lenksystem ist eine Lenkwelle 1 mit einem Geschwindigkeitssensor 2 versehen und mit einem Lenkventil 3 verbunden. Dieses wird mit hydraulischer Leistung von einer Motorpumpeneinheit 4 in Abhängigkeit von der Steuerung einer Elektronikeinheit 5 versorgt, die ihrerseits mit dem Geschwindigkeitssensor 2 in Verbindung steht. Durch die Hydraulikunterstützung wird die zur Betätigung des Lenkgetriebes 6 aufzubringende Lenkkraft unterstützt.

### Bezugszeichenliste

- Qpum: Volumenstrom, Pumpe
- Qlenk: erforderlicher Lenkvolumenstrom
- pzyl: Zylinderdruck
- B: Korrekturwert
- b: Kennlinie des Motorpumpenaggregates bei Eingangsspannungsreduzierung
- a: Kennlinie des Motorpumpenaggregates bei 100 % Eingangsspannung
- PWM: Pulsweitenmodulation
- 1: Lenkwelle
- 2: Geschwindigkeitssensor
- 3: Lenkventil
- 4: Motor-Pumpeneinheit
- 5: Elektronikeinheit
- 6: Lenkgetriebe

## Patentansprüche

1. Verfahren zur Regelung der Drehzahl einer mittels eines Elektromotors angetriebenen Pumpe einer hydraulischen Servolenkeinrichtung eines Kfz in Abhängigkeit von der Lenkgeschwindigkeit,
**dadurch gekennzeichnet,**
**daß** der aufgrund einer ermittelten Lenkgeschwindigkeit errechnete hydraulische Volumenstrombedarf bis zu einem Maximum um einen zusätzlichen, den Gesamtwirkungsgrad des Systems berücksichtigenden Korrekturfaktor erhöht wird, um aus dem Ergebnis die Soll-Drehzahl der Pumpe zu errechnen und einzustellen.

2. Verfahren nach Anspruch 1, **dadurch gekennzeichnet, daß** die Lenkgeschwindigkeit aus der gemessenen Lenkdrehzahl ermittelt wird.

3. Verfahren nach einem der vorhergehenden Ansprüche, **dadurch gekennzeichnet, daß** der hydraulische Fluß gemessen wird.

4. Verfahren nach einem der vorhergehenden Ansprüche, **dadurch gekennzeichnet, daß** der Korrekturfaktor in Abhängigkeit vom Lenkvolumenstrom ermittelt wird.

5. Verfahren nach einem der vorhergehenden Ansprüche, **dadurch gekennzeichnet, daß** die Werteermittlung mittels eines Computers erfolgt.

6. Verfahren nach einem der vorhergehenden Ansprüche, **dadurch gekennzeichnet, daß** die Korrekturfaktoren systembezogen ermittelt und gespeichert werden.

7. Verfahren nach einem der vorhergehenden Ansprüche, **dadurch gekennzeichnet, daß** die Drehzahlregelung mittels eines Pulsweiten-Modulationsverfahrens erfolgt.

## Claims

1. Method for regulating the rotational speed of a pump, driven by means of an electric motor, of a hydraulic power-assisted steering of a motor vehicle in dependence on the steering speed,
**characterized in that**
the hydraulic volume flow requirement calculated on the basis of a determined steering speed is increased to a maximum by an additional correction factor which takes account of the overall efficiency of the system, for the purpose of calculating and setting the setpoint rotational speed of the pump from the result.

2. Method according to Claim 1, **characterized in that** the steering speed is determined from the measured steering rotational speed.

3. Method according to any one of the preceding Claims, **characterized in that** the hydraulic flow is measured.

4. Method according to any one of the preceding Claims, **characterized in that** the correction factor is determined in dependence on the steering volume flow.

5. Method according to any one of the preceding Claims, **characterized in that** value determination is effected by means of a computer.

6. Method according to any one of the preceding Claims, **characterized in that** the correction factors are determined and stored per system.

7. Method according to any one of the preceding Claims, **characterized in that** the rotational speed is regulated by means of a pulse-width modulation method.

## Revendications

1. Procédé de réglage de la vitesse de rotation d'une pompe entraînée à l'aide d'un moteur électrique et faisant partie d'un dispositif de direction assistée hydraulique d'un véhicule automobile, en fonction de la vitesse de direction, **caractérisé en ce que** le besoin volumique en flux hydraulique, calculé sur la base d'une vitesse de direction déterminée, est augmenté, jusqu'à un maximum, d'un facteur de correction supplémentaire tenant compte du rendement global du système, afin de pouvoir calculer et ajuster, à partir du résultat, la vitesse de rotation de consigne de la pompe.

2. Procédé selon la revendication 1, **caractérisé en ce que** la vitesse de direction est déterminée à partir de la vitesse mesurée de rotation de direction.

3. Procédé selon l'une des revendications précédentes, **caractérisé en ce que** le flux hydraulique est mesuré.

4. Procédé selon l'une des revendications précédentes, **caractérisé en ce que** le facteur de correction est déterminé en fonction du flux volumique de direction.

5. Procédé selon l'une des revendications précédentes, **caractérisé en ce que** la détermination des valeurs est effectuée à l'aide d'un ordinateur.

6. Procédé selon l'une des revendications précédentes, **caractérisé en ce que** les facteurs de correction sont déterminés par rapport au système et mis en mémoire.

7. Procédé selon l'une des revendications précédentes, **caractérisé en ce que** le réglage de la vitesse de rotation est effectué à l'aide d'un procédé de modulation de largeur d'impulsion.
